# EUROPÄISCHE PATENTSCHRIFT

(11) **EP 3 268 852 B1**
(45) Veröffentlichungstag und Bekanntmachung des Hinweises auf die Patenterteilung: **01.05.2024**
(21) Anmeldenummer: 16708670.1
(22) Anmeldetag: 08.03.2016
(51) Int. Cl.: G06F 3/0484, G06F 3/0488

(54) **VERFAHREN ZUR GEZIELTEN AUSWAHL VON ANGEZEIGTEN ELEMENTEN AUF EINER BERÜHRUNGSSENSITIVEN ANZEIGE**
METHOD FOR SPECIFICALLY SELECTING DISPLAYED ELEMENTS ON A TOUCH-SENSITIVE DISPLAY
PROCÉDÉ DE SÉLECTION CIBLÉE D'ÉLÉMENTS AFFICHÉS SUR UN ÉCRAN TACTILE

(30) Priorität: 11.03.2015 DE 102015204319
(43) Veröffentlichungstag der Anmeldung: 17.01.2018
(73) Patentinhaber: KUKA Deutschland GmbH, 86165 Augsburg (DE)
(72) Erfinder: KOGAN, Yevgen, 86152 Augsburg (DE)
(74) Vertreter: Mader, Joachim
(86) Internationale Anmeldenummer: PCT/EP2016/054910
(87) Internationale Veröffentlichungsnummer: WO 2016/142378

(56) Entgegenhaltungen:
- EP-A1- 2 378 402
- DE-A1-102010 036 904
- DE-A1-102012 102 749
- US-A1- 2012 151 401
- US-A1- 2013 132 892

## Beschreibung

### Gebiet der Erfindung

Die Erfindung betrifft ein Verfahren zur gezielten Auswahl von angezeigten Elementen auf einer berührungssensitiven Anzeige, und insbesondere ein Verfahren zur gezielten Auswahl von sehr klein dargestellten Elementen, sowie eine Datenverarbeitungsanlage zur Ausführung des Verfahrens.

### Hintergrund der Erfindung

Berührungssensitive Anzeigen, wie Touchscreens, sind in elektronischen Vorrichtungen als Ein- und Ausgabevorrichtung weit verbreitet. Auch in industriellen Anwendungen werden berührungssensitive Anzeigen zunehmend zur Anzeige von Informationen und zum Bedienen von Maschinen und Prozessen verwendet. Die Anforderungen an berührungssensitive Anzeigen in industriellen Anwendungen unterscheiden sich dabei häufig von den Anforderungen an berührungssensitive Anzeigen in privaten Anwendungen, wie Consumer Electronics, da oftmals komplexe Strukturen zur Kontrolle und zur Bedienung der Maschinen und Prozesse dargestellt werden müssen. Dies führt dazu, dass bei der Darstellung vollständiger Strukturen die einzelnen Elemente sehr klein dargestellt werden müssen. Die Darstellung vollständiger Strukturen ist in industriellen Anwendungen oftmals notwendig, um die Komplexität der Struktur beherrschen zu können.

Beispielsweise sollen in industriellen Anwendungen, auf der berührungssensitiven Anzeige große Tabellen, Ablaufschemata eines Steuerungsprogramms oder Bewegungsbahnen einer Maschine und/oder eines Manipulators dargestellt werden.

Ein Manipulator ist ein Gerät, welches die physikalische Interaktion mit der Umgebung ermöglicht. Vorzugsweise sind die verwendeten Manipulatoren Industrieroboter, wobei ein Industrieroboter ein automatisch gesteuerter, frei programmierbarer Mehrzweck-Manipulator ist, der in drei oder mehr Achsen programmierbar ist und zur Verwendung in der Automatisierungstechnik entweder an einem festen Ort oder beweglich angeordnet sein kann.

Die Bewegungsbahn eines Manipulators bezeichnet eine Raumkurve, entlang der sich ein Punkt, wie typischerweise der Tool Center Point (TCP), des Manipulators bewegt. Die Bewegungsbahn ist typischerweise durch mehrere Punkte definiert. Eine typische Anwendung, welche bei der Bedienung eines Manipulators auftritt, ist die Änderung von Punkten, welche die Bewegungsbahn des Manipulators definieren, um eine geänderte Bewegungsbahn zu erzeugen. Um komplexe Bewegungsbahnen vollständig erfassen zu können, ist es vorteilhaft, diese auch vollständig auf der berührungssensitiven Anzeige anzuzeigen. Jedoch ist es für den Bediener nicht ohne weiteres möglich, einzelne Punkte der Bewegungsbahn exakt auszuwählen, da die realen Abmessungen der Bewegungsbahn typischerweise die Abmessungen der berührungssensitiven Anzeige deutlich überschreiten. Beispielsweise kann eine Bewegungsbahn eine Länge von 1 m oder mehr aufweisen. Bekannte berührungssensitive Anzeigen weisen typischerweise eine Größe im Bereich von 3" bis 12" Bildschirmdiagonale auf. Insbesondere ist die Größe der berührungssensitiven Anzeigen beschränkt, da diese vorzugsweise tragbar ausgestaltet sind. Ebenso kann eine berührungssensitive Anzeige auch an einer Maschine oder einem Manipulator angeordnet sein. Soll nun, um im genannten Beispiel zu bleiben, auf der Bewegungsbahn des Manipulators, welche auf der berührungssensitiven Anzeige vollständig angezeigt wird, ein Punkt mit einer Genauigkeit von ± 0,1 mm ausgewählt werden, so ist dies für einen Bediener nicht ohne weiteres möglich.

Dieses Problem kann auch auftreten, wenn ein Bediener gezielt einen Eintrag oder ein Element aus einer angezeigten Tabelle oder aus einem Ablaufschema auswählen möchte, wobei die einzelnen angezeigten Einträge/Elemente oftmals klein dargestellt sind. Insbesondere ist die Auswahl deshalb schwierig, da typischerweise zur Eingabe von Auswahlbefehlen auf einer berührungssensitiven Anzeige ein Eingabepunkt genutzt wird. Dieser Eingabepunkt entspricht der Position einer von der berührungssensitiven Anzeige erfassten Berührung mit einem Eingabemittel, wie beispielsweise einem Eingabestift oder einem Finger des Bedieners. Da diese Eingabemittel eine bestimmte Abmessung aufweisen, weist auch der Eingabepunkt eine Abmessung auf, welche der berührten Fläche der berührungssensitiven Anzeige entspricht. Ist die berührte Fläche größer als das angezeigte Element, so ist die gezielte Auswahl des Elements nicht ohne weiteres möglich. Weiter wird die gezielte Auswahl eines angezeigten Elements erschwert, da sich das Eingabemittel typischerweise über der Anzeige befindet, und so dem Bediener die Sicht auf die auszuwählenden Elemente verdeckt.

US 2012/151401 A1 betrifft ein Verfahren zur Steuerung eines Berührungsbildschirms unter Verwendung einer Zeitleiste.

EP 2 378 402 A1 betrifft eine Schiebebalken-Anzeigesteuerungsvorrichtung, die ein Anzeigemittel umfasst, das einen ersten Schiebebalken anzeigt, der einen ersten Schieber und einen ersten Balken enthält. Zudem umfass die Anzeigesteuerungsvorrichtung ein Eingabemittel, das einen beliebigen Teil des auf dem Anzeigemittel angezeigten ersten Schiebebalkens auf der Grundlage einer Berührungsbedienung auswählen kann, und ein Steuermittel, das das Anzeigemittel und das Eingabemittel steuert.

US 2013/132 892 A1 betrifft ein Bildlaufsystem mit einstellbarer Granularität. Aufgabe der vorliegenden Erfindung ist es die genannten Nachteile auszuräumen oder zu verbessern und ein Verfahren sowie eine Vorrichtung bereitzustellen, welche eine gezielte Auswahl von angezeigten Elementen auf einer berührungssensitiven Anzeige ermöglichen.

### Detaillierte Beschreibung der Erfindung

Die Aufgabe wird durch ein Verfahren gemäß Anspruch 1, eine Datenverarbeitungsanlage gemäß Anspruch 9 und ein Manipulatorsystem gemäß Anspruch 10 gelöst. Insbesondere wird die Aufgabe gelöst durch ein Verfahren zur gezielten Auswahl eines bestimmten Punktes einer auf einer berührungssensitiven Anzeige dargestellten Bewegungsbahn eines Manipulators, wobei das Verfahren die folgenden Verfahrensschritte umfasst:
a) temporäre Auswahl eines ersten Punktes der Bewegungsbahn mittels eines Eingabepunktes auf der berührungssensitiven Anzeige;
b) Erfassen einer ersten Bewegungsrichtung des Eingabepunktes auf der berührungssensitiven Anzeige und Auswahl eines zweiten Punktes der Bewegungsbahn, welches der aktuellen Position des Eingabepunkts in einer ersten Skalierung entspricht;
c) Erfassen einer zweiten Bewegungsrichtung des Eingabepunktes auf der berührungssensitiven Anzeige, wobei die Auswahl des zweiten Punktes der Bewegungsbahn erhalten bleibt;
d) Beim Erfassen der zweiten Bewegungsrichtung des Eingabepunktes, ändern der ersten Skalierung in eine zweite unterschiedliche Skalierung; und danach
e) Erfassen einer Bewegung des Eingabepunktes in der ersten Bewegungsrichtung und Auswahl des bestimmten Punktes der Bewegungsbahn, welcher der aktuellen Position des Eingabepunkts in der zweiten Skalierung entspricht.

Erfindungsgemäß sind die angezeigten Elemente Punkte einer auf einer berührungssensitiven Anzeige dargestellten Bewegungsbahn eines Manipulators. Solche angezeigten Elemente ermöglichen die Bedienung und Steuerung eines Manipulators im industriellen Umfeld mittels einer berührungssensitiven Anzeige. So können beispielsweise Bewegungsbahnen des Manipulators geändert werden. Zunächst muss der Eingabepunkt mittels eines Eingabemittels, wie beispielsweise einem Eingabestift oder einem Finger des Bedieners über einem angezeigten Element platziert werden, um dieses temporär auszuwählen. So kann der Startpunkt des Verfahrens bestimmt werden. Wird das Eingabemittel nun in eine erste Bewegungsrichtung bewegt, so kann die erste Bewegungsrichtung erfasst werden und die Auswahl der angezeigten Elemente ändert sich entsprechend der Bewegung des Eingabepunktes, respektive des Eingabemittels. Vorzugsweise ist die erste Skalierung der Bewegung des Eingabepunktes zur Änderung der Auswahl so skaliert, dass die Elemente ausgewählt werden, welche an der aktuellen Position des Eingabepunktes angezeigt werden. Der Eingabepunkt und die aktuelle Auswahl bewegen sich in diesem Fall geometrisch annähernd gleich weit über die berührungssensitive Anzeige. Wird der Eingabepunkt eine gewisse Länge über die berührungssensitive Anzeige bewegt, so wird auch die Auswahl um annähernd die gleiche Länge mit bewegt. Die Skalierung ist daher das Verhältnis des Wegs des Eingabepunktes auf der berührungssensitiven Anzeige zum Weg der aktuellen Auswahl der angezeigten Elemente auf der berührungssensitiven Anzeige. Im obigen Beispiel ist die erste Skalierung 1:1. Die Verwendung einer anderen Skalierung als erste Skalierung ist ebenfalls möglich.

Wird beispielsweise zunächst als Startpunkt ein beliebiger Punkt einer angezeigten Bewegungsbahn eines Manipulators durch Berühren der berührungssensitiven Anzeige ausgewählt, so kann die Auswahl durch eine Bewegung des Eingabepunktes verändert werden. Hierdurch ist es dem Bediener möglich, eine grobe Vorauswahl zu treffen. Der Bediener kann also einen Punkt oder ein Element in der Nähe des Punktes oder des Elementes auswählen, welches er tatsächlich auszuwählen beabsichtigt.

Wird im Anschluss eine zweite Bewegungsrichtung des Eingabepunktes erfasst, so bleibt die aktuelle Auswahl erhalten. Die zweite Bewegungsrichtung kann jede beliebige Richtung sein, welche von der ersten Bewegungsrichtung abweicht. Das heißt, die erste und die zweite Bewegungsrichtung dürfen nicht kollinear sein. Somit kann unterschieden werden, ob eine weitere Änderung der Auswahl gewünscht wird, oder ob wie im Folgenden beschrieben die Skalierung geändert werden soll.

Bewegt der Bediener den Eingabepunkt in die zweite Bewegungsrichtung wird die Skalierung zur Auswahl geändert. Die Änderung der ersten Skalierung in eine zweite Skalierung ermöglicht im Folgenden eine präzisere Auswahl der angezeigten Elemente. Um im obigen Beispiel zu bleiben, bewegen sich der Eingabepunkt und die aktuelle Auswahl geometrisch nicht mehr in etwa gleich weit. Vorzugsweise bewegt sich die Auswahl der angezeigten Elemente auf der berührungssensitiven Anzeige nun gemäß der zweiten Skalierung weniger weit als der durch das Eingabemittel (z.B. Finger des Bedieners, Eingabestift) bewegte Eingabepunkt über die berührungssensitive Anzeige. Dies hat den Vorteil, dass beliebig klein angezeigte Elemente, wie nachstehend beschrieben, gezielt ausgewählt werden können, da durch die Skalierung eine größere Bewegung des Eingabepunktes in eine kleinere Bewegung der Auswahl umgesetzt wird. Beispielsweise wird die Skalierung von einer ersten Skalierung von 1:1 in eine zweite Skalierung von 2:1 oder 3:1 geändert. Die Änderung der Skalierung ermöglicht überdies, dass die ursprünglich angezeigten Elemente der berührungssensitiven Anzeige weiterhin vollständig angezeigt werden können, und so dem Bediener eine gute Übersicht und Orientierung gewährt wird.

Wird der Eingabepunkt im Anschluss wieder in Richtung der ersten Bewegungsrichtung bewegt so geht die bewegungssensitive Anzeige wieder in den Auswahlmodus über und die Elemente werden nun gemäß der zweiten Skalierung ausgewählt. Dies ist einerseits vorteilhaft, da nun die Elemente genauer ausgewählt werden können, und andererseits die Position der Auswahl auf der berührungssensitiven Anzeige nun nicht mehr mit der Position des Eingabepunktes identisch ist. So wird das aktuell ausgewählte Element nicht mehr durch das Eingabemittel verdeckt. Der Bediener sieht folglich, wie sich die Auswahl beispielsweise neben seinen Finger verändert. Somit wird die gezielte Auswahl von angezeigten Elementen weiterhin vereinfacht.

Vorzugsweise wird das Eingabemittel während der Verfahrensschritte a) bis e) nicht abgesetzt, so dass es die berührungssensitive Anzeige stets berührt. Somit ist eine intuitive und schnelle Auswahl eines angezeigten Elements mittels der berührungssensitiven Anzeige möglich.

Weiterhin ist es möglich, das Verfahren auf einfachen berührungssensitiven Anzeigen auszuführen, da keine zeitgleichen Mehrfachberührungen (Multitouch) der Anzeige zur Bedienung benötigt werden. Dies ist insbesondere vorteilhaft, da im industriellen Umfeld oftmals robuste berührungssensitive Anzeigen zum Einsatz kommen, welche eine Mehrfachberührung nicht unterstützen. Folglich ist eine intuitive und einfache Bedienung auch auf diesen robusten Anzeigen möglich.

Vorzugsweise entspricht die Änderung der ersten Skalierung in eine zweite Skalierung einer Funktion der Länge der Bewegung des Eingabepunktes in der zweiten Bewegungsrichtung, wobei die Funktion bevorzugt
- eine monoton steigende Funktion der Länge der Bewegung des Eingabepunktes in der zweiten Bewegungsrichtung, oder
- eine proportionale Funktion der Länge der Bewegung des Eingabepunktes in der zweiten Bewegungsrichtung, oder
- eine exponentielle Funktion der Länge der Bewegung des Eingabepunktes in der zweiten Bewegungsrichtung ist.

Ändert sich die Skalierung in Abhängigkeit von der Länge der Bewegung des Eingabepunktes in der zweiten Bewegungsrichtung, so ist es dem Bediener möglich, die Skalierung gezielt einzustellen. Der Bediener ist folglich nicht an eine vordefinierte Änderung der ersten Skalierung in eine zweite Skalierung von beispielsweise 1:1 zu 3:1 gebunden. Das gezielte Einstellen der Skalierung ermöglicht dem Bediener beispielsweise, eine grobe Skalierung zu verwenden, wenn das auszuwählende Element bereits relativ groß angezeigt wird, und somit eine Auswahl auch mit einer groben Skalierung möglich ist. Hingegen kann der Bediener eine feine Skalierung verwenden, um relativ klein angezeigte Elemente präzise auswählen zu können. Somit ist sowohl eine schnelle als auch präzise Auswahl des auszuwählenden Elements möglich.

Eine proportionale Funktion der Länge der Bewegung des Eingabepunktes in der zweiten Bewegungsrichtung ist vorteilhaft, da der Bediener so intuitiv eine gewünschte zweite Skalierung einstellen kann. Beispielsweise sei die erste Skalierung 1:1. Würde in diesem Fall der Eingabepunkt 1 cm über die berührungssensitive Anzeige bewegt, so verschöbe sich die Auswahl ebenfalls um 1 cm. Würde nun beispielsweise der Eingabepunkt in der zweiten Bewegungsrichtung um 3 cm bewegt, so änderte sich die erste Skalierung in eine zweite Skalierung, welche beispielsweise 3:1 betragen würde. Das hieße, würde der Eingabepunkt um 1 cm bewegt, so bewegte sich die Auswahl um 1/3 cm. Im Falle einer proportionalen Änderung ergäbe sich bei einer Bewegung des Eingabepunktes in der zweiten Bewegungsrichtung um 5 cm eine zweite Skalierung von 5:1.

Vorzugsweise ist die Änderung der ersten Skalierung in eine zweite Skalierung eine monoton steigende Funktion mit einer Steigung größer 1, da so große Änderungen der Skalierung auch bei kleinen Bewegungen des Eingabepunktes in der zweiten Bewegungsrichtung möglich sind. Dies ist insbesondere vorteilhaft, wenn die Abmessung der berührungssensitiven Anzeige in der zweiten Bewegungsrichtung begrenzt ist. Somit können zweite Skalierungen von vorzugsweise 10:1, noch mehr bevorzugt von 100:1, besonders bevorzugt von 1000:1 und am meisten bevorzugt von 10.000:1 erreicht werden. Insbesondere ermöglicht eine monoton steigende Funktion bevorzugte Skalierungen einfach auswählbar zu machen. Hierzu muss beispielsweise der Längenbereich einer Länge der Bewegung des Eingabepunktes in der zweiten Bewegungsrichtung, welcher einer bevorzugten Skalierung entspricht, eine flachere Steigung der monoton steigenden Funktion aufweisen. In Folge dessen ändert sich die Skalierung nur wenig in dem entsprechenden Längenbereich. Weitere Skalierungen sind je nach Anwendung möglich. Vorzugsweise wird zur Änderung der Skalierung anstelle einer monoton steigenden Funktion eine exponentielle Funktion genutzt. Exponentielle Funktionen ermöglichen eine starke Änderung der Skalierung mit zunehmender Länge der Bewegung des Eingabepunktes in der zweiten Bewegungsrichtung. Weitere Funktionen sind ebenfalls möglich.

Vorzugsweise schließen die erste Bewegungsrichtung und die zweite Bewegungsrichtung einen Winkel α im Bereich von 70° bis 110°, besonders bevorzugt im Bereich von 80° bis 100°, noch bevorzugter im Bereich von 85° bis 95° und am bevorzugtesten von im Wesentlichen 90° ein.

Eine deutliche Unterscheidung der ersten und der zweiten Bewegungsrichtung durch einen Winkel α ist vorteilhaft, da die Bewegungsrichtungen sicher erkannt werden können. Folglich kann sicher zwischen der ersten und der zweiten Bewegungsrichtung unterschieden werden. Ein Winkel α von im Wesentlichen 90° ist zudem besonders intuitiv für den Bediener.

Vorzugsweise wird beim Erfassen einer ersten Bewegungsrichtung nur ein Abschnitt der Bewegung des Eingabepunktes zum Erkennen der der ersten Bewegungsrichtung ausgewertet, wobei danach der Eingabepunkt in der zweiten Skalierung frei bewegt werden kann, um eine Auswahl eines angezeigten Elements zu bewirken.

Muss nur ein erster Abschnitt der Bewegung des Eingabepunktes der ersten Bewegungsrichtung entsprechen, so kann der Bediener in Verfahrensschritt e) die Auswahl der angezeigten Elemente sehr gezielt vornehmen.

Vorzugsweise ist die erste Bewegungsrichtung eine vordefinierte Bewegungsrichtung, und eine Auswahl eines angezeigten Elements erfolgt nur dann, wenn eine Bewegung des Eingabepunkts in der vordefinierten Bewegungsrichtung erfolgt.

Die vordefinierte Bewegungsrichtung ermöglicht es eine Auswahlaktion (Verfahrensschritt b) von anderen Aktionen, welche der Bediener auf der berührungssensitive Anzeige ausführen kann zu unterscheiden. Beispielsweise kann eine solche vordefinierte Bewegungsrichtung einer Richtung in Richtung der Spalten einer Tabelle oder in Richtung der Zeilen einer Tabelle entsprechen, um Einträge in den Spalten/Zeilen der Tabelle auszuwählen. Ebenso kann eine Richtung tangential zu einem ausgewählten Punkt einer angezeigten Bewegungsbahn eines Manipulators eine vordefinierte Bewegungsrichtung sein, welche die gezielte Auswahl weiterer Punkte auf der Bewegungsbahn zulässt.

Vorzugsweise wird die Auswahl eines angezeigten Elements auf der berührungssensitiven Anzeige angezeigt. Die Anzeige der Auswahl ist vorteilhaft, da so der Bediener unmittelbar erkennen kann, welches angezeigte Element aktuell ausgewählt ist. Die Anzeige der Auswahl kann beispielsweise durch eine farbliche Änderung des ausgewählten Elements, durch eine Umrahmung, durch einen Zeiger oder ähnliches erfolgen.

Vorzugsweise wird beim Erfassen einer zweiten Bewegungsrichtung eine Anzeige eingeblendet wird, welche einem Bediener eine Änderung der Skalierung anzeigt.

Vorzugsweise umfasst die eingeblendete Anzeige ein Symbol, wie beispielsweise eine Lupe, welches angibt ob die Skalierung größer oder kleiner wird. Weiterhin ist eine Anzeige möglich, welche die aktuelle Skalierung in Form eines Wertes angibt, wie beispielsweise in Form von X:Y, oder in Form eines eingeblendeten Maßstabs oder einer Skala. Das Einblenden einer Anzeige ist vorteilhaft, da so der Bediener die gewünschte Skalierung einfach einstellen kann.

Vorzugsweise umfasst das Verfahren weiterhin den folgenden Verfahrensschritt: f) Vergrößern des Bereichs, in welchem das ausgewählte angezeigte Element liegt, in Abhängigkeit der Länge der Bewegung des Eingabepunkts in der zweiten Bewegungsrichtung.

Eine Vergrößerung des Bereichs, in welchem das ausgewählte angezeigte Element liegt ist vorteilhaft, da so die Auswahl des gewünschten auszuwählenden Elements weiter vereinfacht wird. Überdies wird durch die vorhergehende vollständige Anzeige der Elemente eine gute Orientierung und Übersicht ermöglicht. Die Vergrößerung des Bereichs erfolgt vorzugsweise analog zur Änderung der Skalierung wie bereits oben beschrieben.

Vorzugsweise muss zeitlich vor den Verfahrensschritten c) und/oder e) ein Stopp der Bewegung des Eingabepunktes erfasst werden, um die Verfahrensschritten c) und/oder e) auszuführen, wobei der Stopp der Bewegung des Eingabepunktes für eine bestimmte Mindestzeitdauer (t) erfasst werden muss, und die Mindestzeitdauer (t) vorzugsweise 0,1 Sekunden, besonders bevorzugt 0,3 Sekunden und am bevorzugtesten 0,5 Sekunden beträgt.

Das Erfassen eines Stopps der Bewegung des Eingabepunktes ist vorteilhaft, da so klar zwischen den Verfahrensschritten b) und c) sowie d) und e) unterschieden werden kann. Dies verringert das Risiko einer Fehlinterpretation der Bewegung des Eingabepunktes. Vorzugsweise wird das Erfassen des Stopps dem Bediener rück gemeldet. Dies kann grafisch, akustisch oder haptisch erfolgen. Eine Mindestzeitdauer des Stopps ist vorteilhaft, da so die Bedienung einfacher gestaltet werden kann. Dabei soll die Mindestzeitdauer gerade so lange sein, um eine flüssige Bedienung und eine einfache Eingabe durch den Bediener zu ermöglichen. Wird beispielsweise nach Verfahrensschritt b) der Eingabepunkt nicht weiter bewegt, so wird nach Verstreichen der Mindestzeitdauer eine zweite Bewegungsrichtung erfasst (Verfahrensschritt c)).

Die oben beschriebene Aufgabe wird auch durch eine Datenverarbeitungsanlage umfassend eine berührungssensitive Anzeige und einen Prozessor gelöst, wobei der Prozessor dazu eingerichtet ist, das beschriebene Verfahren auszuführen.

Die oben beschriebene Aufgabe wird weiter durch ein Manipulatorsystem umfassend einen Prozessor und ein Handbediengerät mit einer berührungssensitiven Anzeige gelöst, wobei der Prozessor dazu eingerichtet ist, das beschriebene Verfahren auszuführen.

Die berührungssensitive Anzeige des Handbediengeräts oder der Datenverarbeitungsanlage erfasst die Position des Eingabepunktes. Diese Daten werden an einen Prozessor gesendet, welcher die Daten gemäß dem beschriebenen Verfahren auswertet und das beschriebene Verfahren ausführt. Die Datenverarbeitungsanlage ist vorzugsweise in einem Gehäuse verbaut, so dass die Datenverarbeitungsanlage tragbar ausgestaltet ist. Um Anwendungen, wie beispielsweise eine industrielle Anwendung zu bedienen oder zu steuern, kann die Datenverarbeitungsanlage mit einer entsprechenden Vorrichtung der Anwendung verbunden werden. Ebenso kann die Datenverarbeitungsanlage fest mit einer Vorrichtung der Anwendung verbunden sein.

Das Handbediengerät kann vorzugsweise mit weiteren Komponenten, wie beispielsweise einer Steuerungsvorrichtung des Manipulatorsystems verbunden werden. Das Bereitstellen eines spezifischen Handbediengeräts ist vorteilhaft, da so Sicherheitsfunktionen implementiert werden können, welche eine ungewollte Bedienung des Manipulatorsystems mit einer beliebigen Datenverarbeitungsanlage ausschließen.

### Beschreibung der Figuren

Im Folgenden werden bevorzugte Ausführungsformen der Erfindung anhand der Figuren 1 bis 4 genauer erläutert. Dabei zeigt:
- Fig. 1: ein Ablaufdiagramm eines bevorzugten Verfahrens;
- Fig. 2: ein Verfahren zur Auswahl eines Punktes auf einer Bahnkurve eines Manipulators;
- Fig. 3: ein nicht erfindungsgemäßes Verfahren zur Auswahl einer Funktion eines Ablaufschemas; und
- Fig. 4: ein nicht erfindungsgemäßes Verfahren zur Auswahl eines Tabelleneintrags in einer Spalte und/oder Zeile der Tabelle.

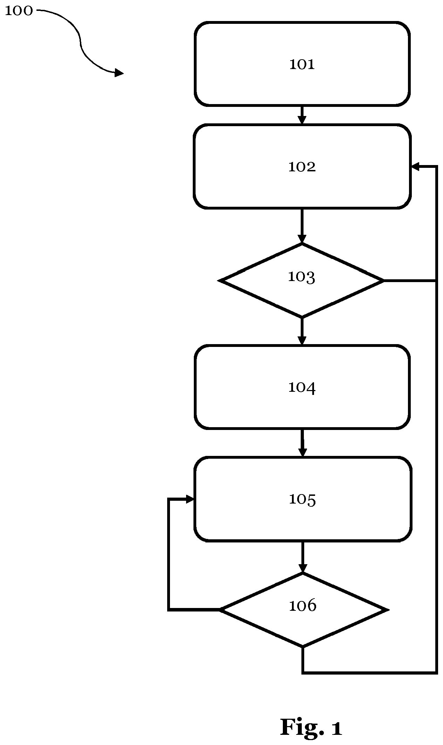

Insbesondere zeigt Fig. 1 ein Verfahren 100 zur gezielten Auswahl von angezeigten Elementen auf einer berührungssensitiven Anzeige. Zunächst wird in Schritt 101 ein erstes angezeigtes Element ausgewählt. Anschließend wird eine erste Bewegungsrichtung eines Eingabepunktes auf eine berührungssensitive Anzeige erfasst und ein angezeigtes Element gemäß der aktuellen Position des Eingabepunktes in einer ersten Skalierung ausgewählt (Schritt 102). Im Folgenden wird ein Stopp 103 der Bewegung des Eingabepunktes mittels der berührungssensitiven Anzeige erfasst. Liegt kein Stopp 103 vor, so springt das Verfahren zurück zu Schritt 102. Liegt hingegen ein Stopp 103 vor, so wird eine zweite Bewegungsrichtung des Eingabepunktes auf der berührungssensitiven Anzeige erfasst (Schritt 104). Gemäß der Länge der Bewegung des Eingabepunktes in der zweiten Bewegungsrichtung wird die erste Skalierung in eine zweite Skalierung geändert (Schritt 105). Im Folgenden wird ein Stopp 106 der Bewegung des Eingabepunktes mittels der berührungssensitiven Anzeige erfasst. Liegt kein Stopp 106 vor, so springt das Verfahren zurück zu Schritt 105. Andernfalls wird wieder in den Auswahlmodus (Schritt 102) geschalten, und ein angezeigtes Element gemäß der aktuellen Position des Eingabepunktes in der zweiten Skalierung ausgewählt. Vorzugsweise wird die Auswahl durch doppeltes Berühren oder durch das Wegnehmen des Eingabemittels von der berührungssensitiven Anzeige bestätigt. Vorzugsweise wird infolgedessen die zweite Skalierung in die erste Skalierung zurück geändert.

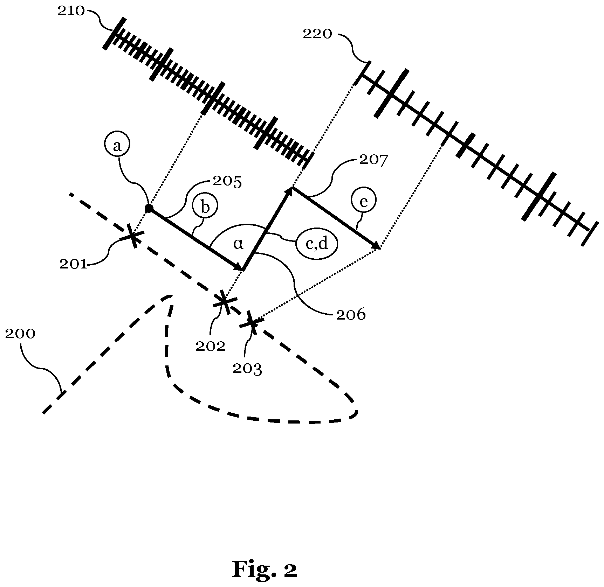

Fig. 2 zeigt eine gestrichelte Linie, welche schematisch eine Bewegungsbahn 200 eines Manipulators darstellt. Diese Bewegungsbahn 200 sei auf der berührungssensitiven Anzeige dargestellt. Die Pfeile entsprechen der Bewegung des Eingabepunktes auf der berührungssensitiven Anzeige. Soll ein bestimmter Punkt 203 der Bewegungsbahn 200 ausgewählt werden, so wird mittels des Eingabepunkts durch Berühren der berührungssensitiven Anzeige zunächst ein erster Punkt 201 der Bewegungsbahn 200 temporär ausgewählt (Verfahrensschritt (a)). Anschließend wird gemäß Verfahrensschritt (b) eine erste Bewegungsrichtung 205 des Eingabepunktes erfasst und die Auswahl des angezeigten Elements entsprechend mit bewegt, so dass am Ende dieser ersten Bewegung ein zweiter Punkt 202 ausgewählt ist. Vorzugsweise erfolgt diese Auswahl nur dann, wenn die erste Bewegungsrichtung einer vordefinierten Bewegungsrichtung entspricht, welche beispielsweise tangential zur Bewegungsbahn 200 im ersten Punkt 201 ist.

Möchte der Bediener, zur genaueren Auswahl von Elementen, die Skalierung ändern, bewegt er den Eingabepunkt in die zweite Bewegungsrichtung 206, wobei diese Bewegungsrichtung 206 erfasst wird (Verfahrensschritt (c)) und die Auswahl des angezeigten Elements 202 erhalten bleibt. Die erste 205 und zweite Bewegungsrichtung 206 schließen den Winkel α ein. Durch die Bewegung des Eingabepunktes in Richtung der zweiten Bewegungsrichtung 206 wird die erste Skalierung 210 in eine zweite Skalierung 220 geändert (Verfahrensschritt (d)). Die Änderung der Skalierung ist vorzugsweise proportional zur Länge der Bewegung des Eingabepunktes in der zweiten Bewegungsrichtung 206. Durch die Änderung der Skalierung von der ersten Skalierung 210 in eine zweite Skalierung 220 bewegt sich die Auswahl geringer als der Eingabepunkt über die berührungssensitive Anzeige. Zur weiteren Auswahl von Elementen wird anschließend eine Bewegung des Eingabepunktes in der ersten Bewegungsrichtung 205 erfasst und ein Punkt der Bewegungsbahn 200 ausgewählt, welcher der aktuellen Position des Eingabepunktes in der zweiten Skalierung 220 entspricht. So kann gezielt der bestimmte Punkt 203 der Bewegungsbahn 200 ausgewählt werden, auch wenn diese klein dargestellt wird.

Im vorliegenden gezeigten Beispiel ändert sich die Skalierung von 1:1 zu 3:1. Wie in der Skalierung 210 zu sehen ist, führt die erste Bewegung in der ersten Bewegungsrichtung (Verfahrensschritt (b)) zu einer Änderung der Auswahl von 18 Einheiten in der ersten Skalierung 210. Die zweite Bewegung in der ersten Bewegungsrichtung (Verfahrensschritt (e)) führt zu einer Änderung der Auswahl von 6 Einheiten in der zweiten Skalierung 220. Somit bewegt sich die Auswahl geringer als der Eingabepunkt über die berührungssensitive Anzeige.

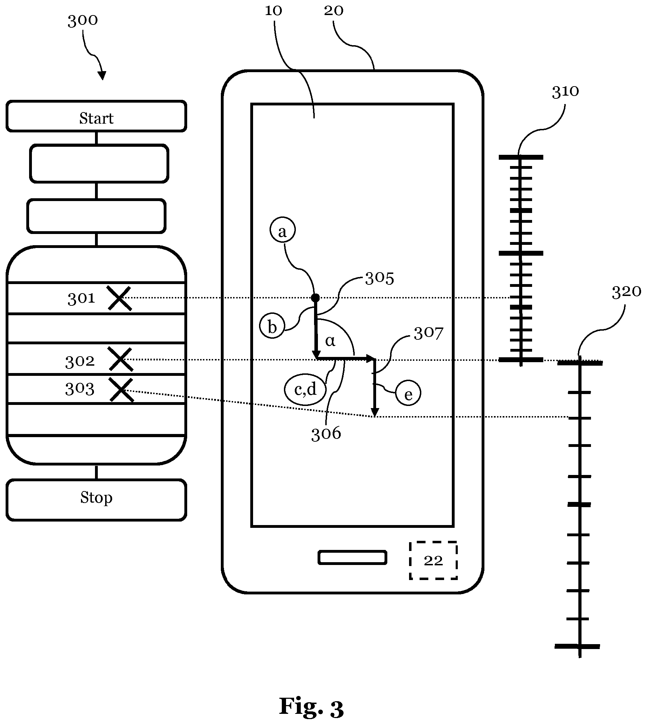

Fig. 3 zeigt schematisch ein nicht beanspruchtes Beispiel eines Ablaufschemas 300 eines Manipulatorsteuerungsprogramms, welches auf der berührungssensitiven Anzeige 10 dargestellt wird. Die berührungssensitive Anzeige ist beispielsweise Teil einer Datenverarbeitungsanlage oder eines Handbediengerätes 20. Der Prozessor 22 ist dazu eingerichtet, das beschriebene Verfahren auszuführen. Um Figur 3 übersichtlich zu gestalten, ist das Ablaufschema 300, welches auf der berührungssensitiven Anzeige 10 dargestellt wird, neben der berührungssensitiven Anzeige 10 abgebildet. Auf der berührungssensitiven Anzeige 10 sind schematisch Pfeile dargestellt, welche der Bewegung des Eingabepunktes auf der berührungssensitiven Anzeige 10 entsprechen. Soll eine bestimmte Funktion 303 ausgewählt werden, so wird mittels des Eingabepunkts durch Berühren der berührungssensitiven Anzeige zunächst eine erste beliebige Funktion 301 in der Nähe der auszuwählenden Funktion 303 ausgewählt (Verfahrensschritt (a)). Anschließend wird gemäß Verfahrensschritt (b) eine erste Bewegungsrichtung 305 des Eingabepunktes erfasst und die Auswahl des angezeigten Elements entsprechend mit bewegt, so dass am Ende dieser ersten Bewegung ein zweite Funktion 302 ausgewählt ist, welche idealerweise näher als die erste Funktion 301 an der bestimmten Funktion 303 liegt.

Soll die Skalierung geändert werden, etwa um die Auswahl von Elementen feiner vorzunehmen, bewegt der Bediener den Eingabepunkt in die zweite Bewegungsrichtung 306, was erfasst wird (Verfahrensschritt (c)). Die Auswahl der zweiten Funktion 302 bleibt erhalten. Die erste und zweite Bewegungsrichtung schließen den Winkel α ein. Durch die Bewegung des Eingabepunktes in Richtung der zweiten Bewegungsrichtung wird die erste Skalierung 310 in eine zweite Skalierung 320 geändert (Verfahrensschritt (d)). Die Änderung der Skalierung ist vorzugsweise proportional zur Länge der Bewegung des Eingabepunktes in der zweiten Bewegungsrichtung 306. Damit kann der Bediener weiterhin das Maß der zweiten Skalierung nach Bedarf auswählen. Durch die Änderung der Skalierung von der ersten Skalierung 310 in eine zweite Skalierung 320 bewegt sich die Auswahl weniger weit als der manuell bewegte Eingabepunkt über die berührungssensitive Anzeige.

Soll mit der Auswahl von Elementen fortgefahren werden, wird anschließend eine Bewegung des Eingabepunktes in der ersten Bewegungsrichtung 305 erfasst und Funktion des Ablaufschemas ausgewählt, welche der aktuellen Position des Eingabepunktes in der zweiten Skalierung 320 entspricht. So kann gezielt die auszuwählenden Funktion 303 ausgewählt werden, auch wenn diese nur sehr klein dargestellt wird.

Im vorliegenden gezeigten Beispiel ändert sich die Skalierung von 1:1 zu 3:1. Wie in der Skalierung 310, 320 zu sehen ist, führt die erste Bewegung in der ersten Bewegungsrichtung (Verfahrensschritt (b)) zu einer Änderung der Auswahl von 6 Einheiten in der ersten Skalierung 310 und die zweite Bewegung in der ersten Bewegungsrichtung (Verfahrensschritt (e)) zu einer Änderung der Auswahl von 2 Einheiten in der zweiten Skalierung 220. Somit bewegt sich die Auswahl geringer als der Eingabepunkt über die berührungssensitive Anzeige.

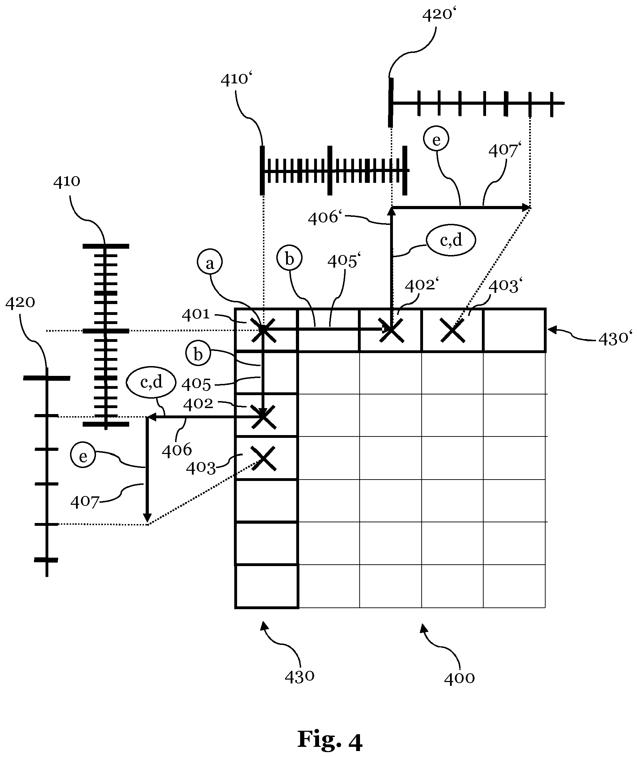

In Fig. 4 zeigt schematisch ein nicht beanspruchtes Beispiel einer Auswahl von Elementen einer Tabelle 400, wobei zwei vordefinierte Bewegungsrichtungen bestimmt sind. Diese Tabelle 400 sei auf der berührungssensitiven Anzeige dargestellt Die erste vordefinierte Bewegungsrichtung ist einer Tabellenspalte 430 zugeordnet und die zweite vordefinierte Bewegungsrichtung ist einer Tabellenzeile 430' zugeordnet. Soll beispielsweise ein bestimmter Tabelleneintrag 403 in der ersten Spalte der Tabelle 400 ausgewählt werden, so wird zunächst ein erster Tabelleneintrag 401 ausgewählt (Verfahrensschritt (a)). Anschließend wird gemäß Verfahrensschritt (b) eine erste Bewegungsrichtung 205 des Eingabepunktes erfasst. Entspricht die erste Bewegungsrichtung 205 der ersten vordefinierten Bewegungsrichtung, so werden die Einträge der Tabellenspalte 430 zur Auswahl freigegeben. Entspricht die erste Bewegungsrichtung 205 der zweiten vordefinierten Bewegungsrichtung, so werden die Einträge der Tabellenzeile 430' zur Auswahl freigegeben. In Folge dessen können nur noch die Elemente ausgewählt werden, welche der entsprechenden angezeigten Menge von Elementen zugeordnet sind, also die Einträge der Tabellenspalte 430 oder der Tabellenzeile 430'.

Wird nun der Eingabepunkt entsprechend der ersten Bewegungsrichtung 405, welche der ersten vordefinierten Bewegungsrichtung entspricht bewegt, so wird die Auswahl des Tabelleneintrags entsprechend mitbewegt, so dass am Ende dieser ersten Bewegung ein zweiter Tabelleneintrag 402 ausgewählt ist. Entspricht die erste Bewegungsrichtung 405' der zweiten vordefinierten Bewegungsrichtung, ist am Ende dieser ersten Bewegung der Tabelleneintrag 402' ausgewählt.

Soll die Skalierung geändert werden, wird anschließend eine zweite Bewegungsrichtung 406, 406' des vom Benutzer bewegten Eingabepunktes erfasst (Verfahrensschritt (c)), wobei die aktuelle Auswahl des angezeigten Elements 402, 402' erhalten bleibt. Durch die Bewegung des Eingabepunktes in Richtung der zweiten Bewegungsrichtung 406, 406' wird die erste Skalierung 410, 410' in eine zweite Skalierung 420, 420' geändert (Verfahrensschritt (d)). Nach der Änderung der Skalierung kann mit der Auswahl der Elemente fortgefahren werden, wobei eine Bewegung des Eingabepunktes in der ersten Bewegungsrichtung 405, 405' erfasst wird und ein Tabelleneintrag der Tabelle ausgewählt, welcher in der freigegebenen Tabellenspalte 430 oder der freigegebenen Tabellenzeile 430' liegt, und welcher der aktuellen Position des Eingabepunktes in der zweiten Skalierung 420, 420' entspricht. So kann gezielt der bestimmte Tabelleneintrag 403; 403' ausgewählt werden, auch wenn dieser nur sehr klein dargestellt wird.

### Bezugszeichenliste

- a, b, c, d, d:: Verfahrensschritte
- a:: Winkel
- 10:: Berührungssensitive Anzeige
- 20: Datenverarbeitungsanlage, Handbediengerät
- 22: Prozessor
- 100:: Verfahren
- 101:: Auswahl eines ersten angezeigten Elements
- 102:: Erfassen einer ersten Bewegungsrichtung
- 103, 106:: Stopp der Bewegung des Eingabepunktes
- 104:: Erfassen einer zweiten Bewegungsrichtung
- 105:: Ändern der ersten Skalierung in eine zweite Skalierung
- 200:: Bewegungsbahn
- 201, 202, 203:: Punkte der Bewegungsbahn
- 205; 305; 405, 405':: Erste Bewegungsrichtung
- 206; 306; 406, 406':: Zweite Bewegungsrichtung
- 207; 307; 407, 407':: Bewegung in erster Bewegungsrichtung
- 210; 310; 410, 410':: Erste Skalierung
- 220; 320; 420, 420':: Zweite Skalierung
- 300:: Ablaufschema
- 400:: Tabelle
- 430, 430':: Menge von angezeigten Elementen

## Patentansprüche

1. Verfahren (100) zur gezielten Auswahl eines bestimmten Punktes (203) einer auf einer berührungssensitiven Anzeige (10) dargestellten Bewegungsbahn (200) eines Manipulators, wobei das Verfahren die folgenden Verfahrensschritte umfasst:
a) temporäre Auswahl (101) eines ersten Punktes (201) der Bewegungsbahn mittels eines Eingabepunktes auf der berührungssensitiven Anzeige (10);
b) Erfassen (102) einer ersten Bewegungsrichtung (205) des Eingabepunktes auf einer berührungssensitiven Anzeige (10) und temporäre Auswahl eines zweiten Punktes (202) Bewegungsbahn, welches der aktuellen Position des Eingabepunktes in einer ersten Skalierung (210) entspricht;
c) Erfassen (104) einer zweiten Bewegungsrichtung (206) des Eingabepunktes auf der berührungssensitiven Anzeige (10), wobei die Auswahl des zweiten Punktes (202) der Bewegungsbahn erhalten bleibt;
d) Beim Erfassen der zweiten Bewegungsrichtung (206) des Eingabepunktes, ändern (105) der ersten Skalierung (210) in eine zweite unterschiedliche Skalierung (220); und danach
e) Erfassen einer Bewegung (207) des Eingabepunktes in der ersten Bewegungsrichtung (205) und Auswahl des bestimmten Punktes (203) der Bewegungsbahn, welcher der aktuellen Position des Eingabepunktes in der zweiten Skalierung (220) entspricht.

2. Verfahren (100) nach Anspruch 1, wobei die Änderung der ersten Skalierung (210) in eine zweite Skalierung (220) einer Funktion der Länge der Bewegung des Eingabepunktes in der zweiten Bewegungsrichtung (206) entspricht, und wobei die Funktion bevorzugt
- eine monoton steigende Funktion der Länge der Bewegung des Eingabepunktes in der zweiten Bewegungsrichtung (206), oder
- eine proportionale Funktion der Länge der Bewegung des Eingabepunktes in der zweiten Bewegungsrichtung (206), oder
- eine exponentielle Funktion der Länge der Bewegung des Eingabepunktes in der zweiten Bewegungsrichtung (206) ist.

3. Verfahren (100) nach einem der vorhergehenden Ansprüche, wobei die erste Bewegungsrichtung (205) und die zweite Bewegungsrichtung (206) vorzugsweise einen Winkel (α) im Bereich von 70° bis 110°, besonders bevorzugt im Bereich von 80° bis 100°, noch bevorzugter im Bereich von 85° bis 95° und am bevorzugtesten von im Wesentlichen 90° einschließen.

4. Verfahren (100) nach einem der vorhergehenden Ansprüche, wobei beim Erfassen einer ersten Bewegungsrichtung (205) nur ein Abschnitt der Bewegung des Eingabepunktes zum Erkennen der der ersten Bewegungsrichtung (205) ausgewertet wird, wobei danach der Eingabepunkt in der zweiten Skalierung (220) frei bewegt werden kann, um eine Auswahl eines Punktes der Bewegungsbahn (203) zu bewirken.

5. Verfahren (100) nach einem der vorhergehenden Ansprüche, wobei die erste Bewegungsrichtung (205) eine vordefinierte Bewegungsrichtung ist, und eine Auswahl eines Punktes der Bewegungsbahn (201, 202, 203) nur dann erfolgt, wenn eine Bewegung des Eingabepunktes in der vordefinierten Bewegungsrichtung erfolgt.

6. Verfahren (100) nach einem der vorhergehenden Ansprüche, wobei beim Erfassen einer zweiten Bewegungsrichtung (206) eine Anzeige eingeblendet wird, welche einem Bediener eine Änderung der Skalierung anzeigt.

7. Verfahren (100) nach einem der vorhergehenden Ansprüche, wobei das Verfahren weiterhin den folgenden Verfahrensschritt umfasst:
f) Vergrößern des Bereichs, in welchem der bestimmte Punkt (203) der Bewegungsbahn liegt, in Abhängigkeit der Länge der Bewegung des Eingabepunktes in der zweiten Bewegungsrichtung (206).

8. Verfahren (100) nach einem der vorhergehenden Ansprüche, wobei zeitlich vor den Verfahrensschritten c) und/oder e) ein Stopp (103, 106) der Bewegung des Eingabepunktes erfasst werden muss, um die Verfahrensschritte c) und/oder e) auszuführen, wobei der Stopp (103, 106) der Bewegung des Eingabepunktes für eine bestimmte Mindestzeitdauer (t) erfasst werden muss, und die Mindestzeitdauer (t) vorzugsweise 0,1 Sekunden, besonders bevorzugt 0,3 Sekunden und am bevorzugtesten 0,5 Sekunden beträgt.

9. Eine Datenverarbeitungsanlage (20) umfassend eine berührungssensitive Anzeige (10) und einen Prozessor (22), wobei der Prozessor (22) dazu eingerichtet ist, das Verfahren gemäß einem der Ansprüche 1 bis 8 auszuführen.

10. Manipulatorsystem umfassend einen Prozessor (22) und ein Handbediengerät (20) mit einer berührungssensitiven Anzeige (10), wobei der Prozessor (22) dazu eingerichtet ist, das Verfahren gemäß einem der Ansprüche 1 bis 8 auszuführen.

## Claims

1. Method (100) for the targeted selection of a specific point (203) of a movement path (200) of a manipulator displayed on a touch-sensitive display (10), wherein the method comprises the following method steps:
a) temporarily selecting (101) a first point (201) of the movement path by means of an input point on the touch-sensitive display (10);
b) detecting (102) a first direction of movement (205) of the input point on a touch-sensitive display (10) and temporarily selecting a second point (202) of the movement path which corresponds to the current position of the input point in a first scale (210);
c) detecting (104) a second direction of movement (206) of the input point on the touch-sensitive display (10), wherein the selection of the second point (202) of the movement path is maintained;
d) upon detecting the second direction of movement (206) of the input point, changing (105) the first scale (210) to a second, different scale (220); and thereafter
e) detecting a movement (207) of the input point in the first direction of movement (205) and selecting the specific point (203) of the movement path which corresponds to the current position of the input point in the second scale (220).

2. Method (100) according to claim 1, wherein the change of the first scale (210) to a second scale (220) corresponds to a function of the length of the movement of the input point in the second direction of movement (206), and wherein the function preferably
- is a monotonically increasing function of the length of the movement of the input point in the second direction of movement (206), or
- is a proportional function of the length of the movement of the input point in the second direction of movement (206), or
- is an exponential function of the length of the movement of the input point in the second direction of movement (206).

3. Method (100) according to one of the preceding claims, wherein the first direction of movement (205) and the second direction of movement (206) preferably enclose an angle (α) in the range of 70° to 110°, particularly preferably in the range of 80° to 100°, even more preferably in the range of 85° to 95° and most preferably of substantially 90°.

4. Method (100) according to one of the preceding claims, wherein, when detecting a first direction of movement (205), only a portion of the movement of the input point is evaluated in order to identify the first direction of movement (205), wherein the input point can then be moved freely in the second scale (220) in order to effect a selection of a point of the movement path (203).

5. Method (100) according to one of the preceding claims, wherein the first direction of movement (205) is a predefined direction of movement, and a selection of a point of the movement path (201, 202, 203) is effected only if a movement of the input point in the predefined direction of movement is effected.

6. Method (100) according to one of the preceding claims, wherein, when detecting a second direction of movement (206), a display is displayed which displays a change of the scale to an operator.

7. Method (100) according to one of the preceding claims, wherein the method further comprises the following method step:
f) enlarging the region in which the specific point (203) of the movement path lies, as a function of the length of the movement of the input point in the second direction of movement (206).

8. Method (100) according to one of the preceding claims, wherein, temporally before method steps c) and/or e), a stop (103, 106) of the movement of the input point has to be detected in order to carry out method steps c) and/or e), wherein the stop (103, 106) of the movement of the input point has to be detected for a specific minimum time period (t), and the minimum time period (t) is preferably 0.1 seconds, particularly preferably 0.3 seconds and most preferably 0.5 seconds.

9. Data processing system (20) comprising a touch-sensitive display (10) and a processor (22), wherein the processor (22) is configured to carry out the method according to one of Claims 1 to 8.

10. Manipulator system comprising a processor (22) and a handheld operating device (20) with a touch-sensitive display (10), wherein the processor (22) is configured to carry out the method according to one of Claims 1 to 8.

## Revendications

1. Procédé (100) pour la sélection ciblée d'un point déterminé (203) d'une trajectoire (200) représentée sur un écran tactile (10) d'un manipulateur, dans lequel le procédé comprend les étapes de procédé suivantes :
a) la sélection temporaire (101) d'un premier point (201) de la trajectoire au moyen d'un point de saisie sur l'écran tactile (10) ;
b) la détection (102) d'une première direction de déplacement (205) du point de saisie sur un écran tactile (10), et la sélection temporaire d'un second point (202) de la trajectoire qui correspond à la position actuelle du point de saisie dans une première mise à l'échelle (210) ;
c) la détection (104) d'une seconde direction de déplacement (206) du point de saisie sur l'écran tactile (10), dans lequel la sélection du second point (202) de la trajectoire reste maintenue ;
d) lors de la détection de la seconde direction de déplacement (206) du point de saisie, la modification (105) de la première mise à l'échelle (210) dans une seconde mise à l'échelle (220) différente ; et, ensuite
e) la détection d'un déplacement (207) du point de saisie dans la première direction de déplacement (205), et la sélection du point déterminé (203) de la trajectoire qui correspond à la position actuelle du point de saisie dans la seconde mise à l'échelle (220).

2. Procédé (100) selon la revendication 1, dans lequel la modification de la première mise à l'échelle (210) en une seconde mise à l'échelle (220) correspond à une fonction de la longueur du déplacement du point de saisie dans la seconde direction de déplacement (206), et dans lequel la fonction est de préférence
- une fonction croissante monotone de la longueur du déplacement du point de saisie dans la seconde direction de déplacement (206), ou
- une fonction proportionnelle de la longueur du déplacement du point de saisie dans la seconde direction de déplacement (206), ou
- une fonction exponentielle de la longueur du déplacement du point de saisie dans la seconde direction de déplacement (206).

3. Procédé (100) selon l'une des revendications précédentes, dans lequel la première direction de déplacement (205) et la seconde direction de déplacement (206) forment de préférence un angle (α) dans la plage de 70° à 110°, de manière particulièrement préférée dans la plage de 80° à 100°, encore plus préférentiellement dans la plage de 85° à 95° et de manière préférée entre toutes de sensiblement 90°.

4. Procédé (100) selon l'une des revendications précédentes, dans lequel, lors de la détection d'une première direction de déplacement (205), seul un segment du déplacement du point de saisie est évalué pour la reconnaissance de la première direction de déplacement (205), dans lequel ensuite le point de saisie peut être déplacé librement dans la seconde mise à l'échelle (220) afin de provoquer une sélection d'un point de la trajectoire (203).

5. Procédé (100) selon l'une des revendications précédentes, dans lequel la première direction de déplacement (205) est une direction de déplacement prédéfinie, et une sélection d'un point de la trajectoire (201, 202, 203) est effectuée seulement lorsqu'un déplacement du point de saisie est effectué dans la direction de déplacement prédéfinie.

6. Procédé (100) selon l'une des revendications précédentes, dans lequel un écran est superposé lors de la détection d'une seconde direction de déplacement (206), qui indique à un utilisateur une modification de la mise à l'échelle.

7. Procédé (100) selon l'une des revendications précédentes, dans lequel le procédé comprend en outre l'étape de procédé suivante :
f) l'agrandissement de la zone dans laquelle le point déterminé (203) de la trajectoire se trouve, en fonction de la longueur du déplacement du point de saisie dans la seconde direction de déplacement (206).

8. Procédé (100) selon l'une des revendications précédentes, dans lequel un arrêt (103, 106) du déplacement du point de saisie doit être détecté avant les étapes de procédé c) et/ou e) afin de réaliser les étapes de procédé c) et/ou e), dans lequel l'arrêt (103, 106) du déplacement du point de saisie doit être détecté pendant une durée minimale (t) déterminée, et la durée minimale (t) est de préférence de 0,1 seconde, de manière particulièrement préférée 0,3 seconde et de manière préférée entre toutes 0,5 seconde.

9. Une installation de traitement de données (20) comprenant un écran tactile (10) et un processeur (22), dans laquelle le processeur (22) est conçu pour réaliser le procédé selon l'une des revendications 1 à 8.

10. Système manipulateur comprenant un processeur (22) et un appareil de commande portable (20) avec un écran tactile (10), dans lequel le processeur (22) est conçu pour réaliser le procédé selon l'une des revendications 1 à 8.
